Europäisches Patentamt

European Patent Office

Office européen des brevets

(11) Veröffentlichungsnummer: **0 284 888 B1**

(12) **EUROPÄISCHE PATENTSCHRIFT**

(45) Veröffentlichungstag der Patentschrift: **04.08.93**

(21) Anmeldenummer: **88104138.8**

(22) Anmeldetag: **16.03.88**

Die Akte enthält technische Angaben, die nach dem Eingang der Anmeldung eingereicht wurden und die nicht in dieser Patentschrift enthalten sind.

(51) Int. Cl.5: **C08G 63/54**, C08L 67/06, C09D 167/06

(54) **Ungesättigte Polyesterharze, ein Verfahren zu ihrer Herstellung, diese Polyesterharze enthaltende Mischungen und deren Verwendung zur Herstellung von Beschichtungen.**

(30) Priorität: **28.03.87 DE 3710428**

(43) Veröffentlichungstag der Anmeldung:
**05.10.88 Patentblatt 88/40**

(45) Bekanntmachung des Hinweises auf die Patenterteilung:
**04.08.93 Patentblatt 93/31**

(84) Benannte Vertragsstaaten:
**AT DE ES FR IT SE**

(56) Entgegenhaltungen:
**EP-A- 0 037 463      EP-A- 0 097 909
DE-A- 1 901 078      DE-A- 2 003 121
DE-A- 2 412 556      LU-A- 42 334**

**CHEMICAL ABSTRACTS, Band 106, Nr. 6, 9. Februar 1987, Seite 100, Nr. 34765a, Columbus, Ohio, US; & CS-A-232 307**

**Kunststoff-Handbuch, Polyester, Bd. VIII, 1979, S. 248-269**

(73) Patentinhaber: **BAYER AG**

**W-5090 Leverkusen 1 Bayerwerk(DE)**

(72) Erfinder: **Meixner, Jürgen, Dr.
Josef-Brocker-Dyk 56
W-4150 Krefeld(DE)**
Erfinder: **Kremer, Wolfgang
Lilienweg 6
W-4173 Kerken 2(DE)**
Erfinder: **Müller, Manfred
Friedrich-Gelsam-Strasse 34
W-5140 Erkelenz(DE)**

EP 0 284 888 B1

**Beschreibung**

Die Erfindung betrifft neue ungesättigte Polyesterharze auf Basis von ausgewählten Ausgangsmaterialien, ein Verfahren zu ihrer Herstellung, diese Polyesterharze als wesentlichen Bestandteil enthaltende Mischungen und deren Verwendung zur Herstellung von Beschichtungen, vorzugsweise auf Holz und holzähnlichen Stoffen.

Ungesättigte Polyesterharze als Bindemittel für UV-härtende Beschichtungen sind seit langem bekannt. So gibt z.B. die DE-AS 1 694 149 an, daß man Gemische aus ungesättigten Polyestern und polymerisierbaren Monomeren unter Zusatz von bestimmten Benzoinverbindungen unter UV-Bestrahlung aushärten kann. Durch die inhibierende Wirkung des Luftsauerstoffs sind Lackierungen auf Basis dieser Systeme oftmals an der Oberfläche nur ungenügend ausgehärtet und deshalb nicht schleifbar. Ein gutes Aussehen von Lackfilmoberflächen auf Holz hat jedoch eine gute Schleifbarkeit der Grundierungsschicht zur Voraussetzung.

Der bei konventioneller Härtung mit Peroxiden eingeschlagene Weg, zur Vermeidung der Luftinhibierung Paraffine zuzusetzen ("Paraffinpolyester"), die sich während der Gelierung an der Oberfläche absetzen, ist nur bedingt möglich, da die von den UV-Strahlern ausgehende Wärmeenergie eine Ausbildung des schützenden Paraffinfilms verhindert. In diesen Fällen muß eine sogenannte Vorgelierzone vorgeschaltet werden.

Ungesättigte Polyester, die $\alpha,\beta$-ungesättigte Dicarbonsäurereste und Allylether- und/oder Polyalkylenglykolreste enthalten ("Glanzpolyester") benötigen kein Paraffin zur Aushärtung der Lackfilmoberfläche, da die Ethergruppen einen autoxidativen Trocknungsprozeß auslösen. Die UV-Härtung solcher Harze mit Allylethergruppen (DE-OS 2 113 998) oder Polyalkylenglykolresten (DE-OS 3 010 428) ergibt wie bei der konventionellen Härtung gut schleifbare Lackfilme, doch ist die Reaktivität solcher Harze oftmals zu gering, um ausreichend hohe Verarbeitungsgeschwindigkeiten zu gewährleisten.

Es war daher die der Erfindung zugrundeliegende Aufgabe, neue Polyesterharze zur Verfügung zu stellen, die nicht mit den genannten Nachteilen behaftet sind, d.h. die insbesondere zur Herstellung von unter dem Einfluß von UV-Strahlung aushärtbaren Beschichtungsmitteln geeignet sind, die bei gutem Verlauf schnell aushärten und Lackfilme einer gut schleifbaren Oberfläche ergeben.

Überraschenderweise konnte diese Aufgabe durch die Bereitstellung der nachstehend näher beschriebenen erfindungsgemäßen Polyesterharze bzw. der diese Polyesterharze als wesentliche Komponente enthaltenden Mischungen gelöst werden.

Gegenstand der Erfindung sind somit ungesättigte Polyesterharze einer Säurezahl von 0 bis 50 und einer Hydroxylzahl von 10 bis 150, dadurch gekennzeichnet, daß sie aus

0,6 bis 0,8 Mol Malein- und/oder Fumarsäureresten,

0,2 bis 0,4 Mol Norbornendicarbonsäureresten,

0,6 bis 0,8 Mol Ethylen- und/oder Propylenglykolresten,

0,2 bis 0,4 Mol Diethylenglykolresten,

0,1 bis 0,2 Mol Benzylalkohol- und/oder Benzoesäureresten und

0 bis 0,2 Mol an anderen Alkoholresten bestehen.

Gegenstand der Erfindung ist auch ein Verfahren zur Herstellung dieser Polyesterharze, welches dadurch gekennzeichnet ist, daß man ein Gemisch aus

0,6 bis 0,8 Mol Maleinsäure, Maleinsäureanhydrid und/oder Fumarsäure,

0,2 bis 0,4 Mol Norbornendicarbonsäure,

0,6 bis 0,8 Mol Ethylen- und/oder Propylenglykol,

0,2 bis 0,4 Mol Diethylenglykol,

0,1 bis 0,2 Mol Benzylalkohol und/oder Benzoesäure und

0 bis 0,2 Mol an anderen ein- oder zweiwertigen Alkoholen

in an sich bekannter Weise einer Schmelz- oder Azeotropveresterungsreaktion unterzieht.

Gegenstand der Erfindung sind auch unter dem Einfluß von UV-Strahlung härtbare Mischungen enthaltend

a) 40 bis 80 Gew.-Teile mindestens eines ethylenisch ungesättigten Polyesterharzes,

b) 20 bis 60 Gew.-Teile Styrol,

c) 0,1 bis 5 Gew.-Teile mindestens eines Fotoinitiators und

d) gegebenenfalls an sich bekannte Hilfs- und Zusatzmittel,

dadurch gekennzeichnet, daß die Komponente a) ein Polyesterharz einer Säurezahl von 0 bis 50 und einer Hydroxylzahl von 10 bis 150 darstellt, welches aus

0,6 bis 0,8 Mol Malein- und/oder Fumarsäureresten,

0,2 bis 0,4 Mol Norbornendicarbonsäureresten,

0,6 bis 0,8 Mol Ethylen- und/oder Propylenglykolresten,

0,2 bis 0,4 Mol Diethylenglykolresten,

0,1 bis 0,2 Mol Benzylalkohol- und/oder Benzoesäureresten und

0 bis 0,2 Mol an anderen Alkoholresten bestehen.

Gegenstand der Erfindung ist schließlich auch die Verwendung dieser Mischungen zur Herstellung von unter dem Einfluß von UV-Strahlung aushärtbaren Beschichtungen.

Die erfindungsgemäßen Polyesterharze weisen eine Säurezahl von 0 bis 50, vorzugsweise 5 bis 40, eine Hydroxylzahl von 10 bis 150, vorzugsweise 10 bis 130 auf. Ihr als Zahlenmittel dampfdruckosmometrisch bestimmbares Molekulargewicht liegt im allgemeinen im Bereich von 300 bis 5000, vorzugsweise 500 bis 2000.

Die Herstellung der erfindungsgemäßen Polyesterharze erfolgt nach bekannten Methoden, z.B. durch Schmelz- oder Azeotropveresterung der Alkohole und Säuren oder deren veresterungsfähigen Derivate, vgl. "Methoden der organischen Chemie" (Houben-Weyl), 4. Auflage, Bd. 14/2, Georg Thieme Verlag, Stuttgart 1961, S. 1 bis 5, 21 bis 33, 40 bis 44.

Bei der Herstellung der erfindungsgemäßen Polyesterharze werden die bereits oben genannten Ausgangsmaterialien in den genannten Molverhältnissen miteinander zur Reaktion gebracht, wobei die Norbornendicarbonsäure auch in situ durch Mitverwendung von Dicyclopentadien neben Fumarsäure bei der Veresterungsreaktion erzeugt werden kann.

Bei den anderen Alkoholen, die gegebenenfalls in Mengen von 0 bis 0,2 Mol bei der Herstellung der Polyesterharze mitverwendet werden können, handelt es sich um einwertige Alkohole mit 1 bis 12 Kohlenstoffatomen und/oder um zweiwertige Alkohole mit 4 bis 10 Kohlenstoffatomen wie beispielsweise Methanol, Ethanol, n-Hexanol, Isooctanol, n-Decanol, Butyldiglykol, Tetramethylendiol, Pentamethylendiol oder Hexamethylendiol.

Um die Polyesterharze vor unerwünschter vorzeitiger Polymerisation zu bewahren, ist es oft empfehlenswert, bereits bei ihrer Herstellung 0,001 bis 0,1 Gew.-%, bezogen auf das Gewicht der Ausgangsmaterialien zur Herstellung der Polyester, an bekannten Polymerisationsinhibitoren oder Antioxidantien wie z.B. die für diesen Zweck üblicherweise eingesetzten Chinone, Hydrochinone, Kupferverbindungen, Phosphite, Amine oder Phenole mitzuverwenden.

Geeignete Fotoinitiatoren c) sind die üblicherweise eingesetzten Verbindungen wie sie z.B. in der Monographie von J. Korsar, Light-Sensitive Systems, J. Wiley & Sons, New York - London - Sydney 1965 beschrieben sind.

Weiterhin gut geeignet sind Benzoinether wie Benzoinisopropylether, Benzilketale, wie z.B. Benzildimethylketal und Hydroxyalkylphenone, wie z.B. 2-Hydroxy-2-methyl-1-phenyl-propan-1-on.

Die erfindungsgemäßen Mischungen können als weitere Zusätze d) u.a. Inhibitoren, Metallverbindungen, Träger- und Füllstoffe sowie Thixotropiermittel, Verlaufsmittel, Glätt- und Mattierungsmittel enthalten.

Die erfindungsgemäßen Mischungen eignen sich insbesondere als Beschichtungsmittel für geeignete Substrate wie insbesondere Holz, Papier, Kunststoffolien und Kartonagen. Die Verarbeitung kann nach allen aus der Lacktechnologie üblichen Methoden wie Gießen, Spritzen oder Walzen erfolgen.

Die Aushärtung der erfindungsgemäß hergestellten Beschichtungen erfolgt am besten unter energiereicher Strahlung, beispielsweise unter Verwendung von Hochdruckstrahlern (Quecksilberdampflampen). Energiearme Leuchtstofflampen sind zwar verwendbar, jedoch ist die damit erzielte Härtungsgeschwindigkeit für die Praxis, beispielsweise für die kurztaktige Möbelfertigung, unzureichend.

In den nachfolgenden Beispielen beziehen sich alle Prozentangaben auf Gewichtsprozente.

Beispiele

Die Herstellung der Polyesterharze 1 bis 7 erfolgte nach Zusatz von 0,02 % Hydrochinon durch Schmelzkondensation unter Stickstoffatmosphäre bei einer Temperatur von 150 bis 200°C.

Nach Beendigung der Reaktion wurden die erhaltenen Polyesterharze bei 100°C 70 %ig in Styrol gelöst.

| Mol | erfindungsgemäße Beispiele | | Vergleichsbeispiele | | | | |
|---|---|---|---|---|---|---|---|
| | 1 | 2 | 3 | 4 | 5 | 6 | 7 |
| Maleinsäure | 0,7 | 0,7 | 0,7 | 0,7 | 0,7 | 0,5 | 0,7 |
| Phthalsäure | - | - | - | 0,3 | 0,3 | - | 0,7 |
| Tetrahydrophthalsäure | - | - | 0,3 | - | - | - | - |
| Norbornendicarbonsäure | 0,3 | 0,3 | - | - | - | 0,5 | 0,3 |
| Ethylenglykol | 0,7 | 0,5 | 0,7 | - | 0,5 | 0,7 | 0,7 |
| Diethylenglykol | 0,3 | 0,2 | 0,3 | - | 0,5 | 0,3 | 0,4 |
| Propylenglykol | - | 0,3 | - | 1,1 | - | - | - |
| Benzylalkohol | 0,2 | 0,1 | 0,1 | - | - | - | - |
| Trimethylolpropandiallyl-ether | - | - | - | - | 0,1 | 0,1 | - |

Die Säurezahlen der 70 %ig in Styrol gelösten Produkte lagen zwischen 10 und 30 mg KOH/g, die Hydroxylzahlen zwischen 10 und 60 mg KOH/g, die Viskositäten bei ca. 1200 mPa.s (23°C).

Nach Zugabe von 2 Gew.-Teilen Benzildimethylketal und 2 Gew.-Teilen eines handelsüblichen Verlaufsmittels (1 %ige Lösung in Toluol eines Siliconöls, ®Baysilon-Lackadditiv-PL, Hersteller: Bayer AG, Leverkusen) wurden die Mischungen durch Gießen in einer Schichtdicke von 250 μm auf Holz aufgetragen.

Gehärtet wurde unter 2 IST-Strahlern (Impulsstrahler der Fa. IST-Strahlentechnik, Leistung 80 Watt/cm, Strahlerabstand 20 cm) mit 4 m/min Verarbeitungsgeschwindigkeit.

Die nachstehende Tabelle verdeutlicht die hervorragende Schleifbarkeit der erfindungsgemäßen Produkte 1 und 2.

| | erfindungsgemäße Beispiele | | Vergleichsbeispiele | | | | |
|---|---|---|---|---|---|---|---|
| | 1 | 2 | 3 | 4 | 5 | 6 | 7 |
| Oberfläche | hart | hart | hart | klebt | weich | klebt | Krater/trüb |
| Schleifbarkeit | sehr gut | sehr gut | schlecht | nicht | nicht | nicht | gut |

Der Polyester des Vergleichsbeispiels 3 (ohne Norbornendicarbonsäure) ergibt zwar eine harte Lackfilmoberfläche, diese ist jedoch nur schlecht schleifbar (Schleifpapier setzt sich zu).

Polyester 4 als typischer Vertreter der sogenannten Paraffinpolyester ergibt, ohne Paraffinzusatz gehärtet, nur klebende Oberflächen.

Als Vertreter der sogenannten Glanzpolyesterharze (mit Allylethergruppen) zeigt Polyester 5 bei dieser Verarbeitungsgeschwindigkeit keine ausreichende Durchhärtung.

Beispiel 6 macht deutlich, daß Harze mit zu hohem Gehalt an Norbornendicarbonsäure keine ausreichende Reaktivität besitzen.

Beispiel 7 zeigt die Notwendigkeit der benzylischen Gruppen im Polyester, da sonst Oberflächenstörungen im Lackfilm auftreten.

**Patentansprüche**
**Patentansprüche für folgende Vertragsstaaten : AT, DE, FR, IT, SE**

1. Ungesättigte Polyesterharze einer Säurezahl von 0 bis 50 und einer Hydroxylzahl von 10 bis 150, dadurch gekennzeichnet, daß sie aus
0,6 bis 0,8 Mol Malein- und/oder Fumarsäureresten,
0,2 bis 0,4 Mol Norbornendicarbonsäureresten,
0,6 bis 0,8 Mol Ethylen- und/oder Propylenglykolresten,
0,2 bis 0,4 Mol Diethylenglykolresten,
0,1 bis 0,2 Mol Benzylalkohol- und/oder Benzoesäureresten und
0 bis 0,2 Mol an anderen Alkoholresten bestehen.

2. Verfahren zur Herstellung von Polyesterharzen gemäß Anspruch 1, dadurch gekennzeichnet, daß man ein Gemisch aus
0,6 bis 0,8 Mol Maleinsäure, Maleinsäureanhydrid und/oder Fumarsäure,
0,2 bis 0,4 Mol Norbornendicarbonsäure,
0,6 bis 0,8 Mol Ethylen- und/oder Propylenglykol,
0,2 bis 0,4 Mol Diethylenglykol,
0,1 bis 0,2 Mol Benzylalkohol und/oder Benzoesäure und
0 bis 0,2 Mol an anderen ein- oder zweiwertigen Alkoholen
in an sich bekannter Weise einer Schmelz- oder Azeotropveresterungsreaktion unterzieht.

3. Unter dem Einfluß von UV-Strahlung härtbare Mischungen enthaltend
a) 40 bis 80 Gew.-Teile mindestens eines ethylenisch ungesättigten Polyesterharzes,
b) 20 bis 60 Gew.-Teile Styrol,
c) 0,1 bis 5 Gew.-Teile mindestens eines Fotoinitiators und
d) gegebenenfalls an sich bekannte Hilfs- und Zusatzmittel,
dadurch gekennzeichnet, daß die Komponente a) ein Polyesterharz einer Säurezahl von 0 bis 50 und einer Hydroxylzahl von 10 bis 150 darstellt, welches aus
0,6 bis 0,8 Mol Malein- und/oder Fumarsäureresten,
0,2 bis 0,4 Mol Norbornendicarbonsäureresten,
0,6 bis 0,8 Mol Ethylen- und/oder Propylenglykolresten,
0,2 bis 0,4 Mol Diethylenglykolresten,
0,1 bis 0,2 Mol Benzylalkohol- und/oder Benzoesäureresten und
0 bis 0,2 Mol an anderen Alkoholresten bestehen.

4. Verwendung der Mischungen gemäß Anspruch 3 zur Herstellung von unter dem Einfluß von UV-Strahlung aushärtbaren Beschichtungen.

**Patentansprüche für den folgenden Vertragsstaat: ES**

1. Verfahren zur Herstellung von Polyesterharzen gemäß Anspruch 1, dadurch gekennzeichnet, daß man ein Gemisch aus
0,6 bis 0,8 Mol Maleinsäure, Maleinsäureanhydrid und/oder Fumarsäure,
0,2 bis 0,4 Mol Norbornendicarbonsäure,
0,6 bis 0,8 Mol Ethylen- und/oder Propylenglykol,
0,2 bis 0,4 Mol Diethylenglykol,

6

EP 0 284 888 B1

0,1 bis 0,2 Mol Benzylalkohol und/oder Benzoesäure und
0 bis 0,2 Mol an anderen ein- oder zweiwertigen Alkoholen
in an sich bekannter Weise einer Schmelz- oder Azeotropveresterungsreaktion unterzieht.

2. Unter dem Einfluß von UV-Strahlung härtbare Mischungen enthaltend
   a) 40 bis 80 Gew.-Teile mindestens eines ethylenisch ungesättigten Polyesterharzes,
   b) 20 bis 60 Gew.-Teile Styrol,
   c) 0,1 bis 5 Gew.-Teile mindestens eines Fotoinitiators und
   d) gegebenenfalls an sich bekannte Hilfs- und Zusatzmittel,
dadurch gekennzeichnet, daß die Komponente a) ein Polyesterharz einer Säurezahl von 0 bis 50 und einer Hydroxylzahl von 10 bis 150 darstellt, welches aus
0,6 bis 0,8 Mol Malein- und/oder Fumarsäureresten,
0,2 bis 0,4 Mol Norbornendicarbonsäureresten,
0,6 bis 0,8 Mol Ethylen- und/oder Propylenglykolresten,
0,2 bis 0,4 Mol Diethylenglykolresten,
0,1 bis 0,2 Mol Benzylalkohol- und/oder Benzoesäureresten und
0 bis 0,2 Mol an anderen Alkoholresten bestehen.

3. Verwendung der Mischung gemäß Anspruch 2 zur Herstellung von unter dem Einfluß von UV-Strahlung aushärtbaren Beschichtungen.

**Claims**
**Claims for the following Contracting States : AT, DE, FR, IT, SE**

1. Unsaturated polyester resins having an acid number of from 0 to 50 and a hydroxyl number of from 10 to 150, characterised in that they consist of
   from 0.6 to 0.8 mol of maleic and/or fumaric acid radicals,
   from 0.2 to 0.4 mol of norbornene dicarboxylic acid radicals,
   from 0.6 to 0.8 mol of ethylene- and/or propylene-glycol radicals,
   from 0.2 to 0.4 mol of diethylene gylcol radicals,
   from 0.1 to 0.2 mol of benzyl alcohol and/or benzoic acid radicals, and
   from 0 to 0.2 mol of other alcohol radicals.

2. A process for the preparation of polyester resins according to claim 1, characterised in that a mixture of
   from 0.6 to 0.8 mol of maleic acid, maleic acid anhydride and/or fumaric acid,
   from 0.2 to 0.4 mol of norbornene dicarboxylic acid,
   from 0.6 to 0.8 mol of ethylene- and/or propylene-glycol,
   from 0.2 to 0.4 mol of diethylene glycol,
   from 0.1 to 0.2 mol of benzyl alcohol and/or benzoic acid, and
   from 0 to 0.2 mol of other mono- or dihydric alohols
   is subjected in known manner to a solvent free or azeotropic esterification reaction.

3. Mixtures curable under the influence of UV-irradiation, containing
   a) from 40 to 80 parts by weight of at least one ethylenically unsaturated polyester resin,
   b) from 20 to 60 parts by weight of styrene,
   c) from 0.1 to 5 parts by weight of at least one photoinitiator, and
   d) optionally auxiliary agents and additives known per se,
characterised in that component a) is a polyester resin having and acid number of from 0 to 50 and a hydroxyl number of from 10 to 150, consisting of
   from 0.6 to 0.8 mol of maleic and/or fumaric acid radicals,
   from 0.2 to 0.4 mol of norbornene dicarboxylic acid radicals,
   from 0.6 to 0.8 mol of ethylene- and/or propylene-glycol radicals,
   from 0.2 to 0.4 mol of diethylene glycol radicals,
   from 0.1 to 0.2 mol of benzyl alcohol or benzoic acid radicals, and
   from 0 to 0.2 mol of other alcohol radicals.

4. Use of the mixtures according to claim 3 for the preparation of coatings which are curable under the influence of UV irradiation.

7

**Claims for the following Contracting State : ES**

1. A process for the preparation of polyester resins according to claim 1, characterised in that a mixture of
   from 0.6 to 0.8 mol of maleic acid, maleic acid anhydride and/or fumaric acid,
   from 0.2 to 0.4 mol of norbornene dicarboxylic acid,
   from 0.6 to 0.8 mol of ethylene- and/or propylene-glycol,
   from 0.2 to 0.4 mol of diethylene glycol,
   from 0.1 to 0.2 mol of benzyl alcohol and/or benzoic acid, and
   from 0 to 0.2 mol of other mono- or dihydric alcohols is subjected in known manner to a solvent free or azeotropic esterification reaction.

2. Mixtures curable under the influence of UV irradiation, containing
   a) from 40 to 80 parts by weight of at least one ethylenically unsaturated polyester resin,
   b) from 20 to 60 parts by weight of styrene,
   c) from 0.1 to 5 parts by weight of at least one photoinitiator, and
   d) optionally auxiliary agents and additives known per se,
   characterised in that component a) is a polyester resin having and acid number of from 0 to 50 and a hydroxyl number of from 10 to 150, consisting of
   from 0.6 to 0.8 mol of maleic and/or fumaric acid radicals,
   from 0.2 to 0.4 mol of norbornene dicarboxylic acid radicals,
   from 0.6 to 0.8 mol of ethylene- and/or propylene-glycol radicals,
   from 0.2 to 0.4 mol of diethylene glycol radicals,
   from 0.1 to 0.2 mol of benzyl alcohol and/or benzoic acid radicals, and
   from 0 to 0.2 mol of other alcohol radicals.

3. Use of the mixture according to claim 2 for the preparation of coatings which are curable under the influence of UV irradiation.

**Revendications**

**Revendications pour les Etats contractants suivants : AT, DE, FR, IT, SE**

1. Résines de polyesters insaturées ayant un indice d'acide de 0 à 50 et un indice d'hydroxyle de 10 à 150, caractérisées en ce qu'elles sont constituées
   de 0,6 à 0,8 mole de restez d'acide maléique et/ou d'acide fumarique,
   de 0,2 à 0,4 mole de restes d'acide norbornènedicarboxylique,
   de 0,6 à 0,8 mole de restez d'éthylène- et/ou de propylène-glycol,
   de 0,2 à 0,4 mole de restes de diéthylène-glycol,
   de 0,1 à 0,2 mole de restes d'alcool benzylique et/ou d'acide benzoïque et
   de 0 à 0,2 mole d'autres restes d'alcools.

2. Procédé de production de résines de polyesters suivant la revendication 1, caractérisé en ce qu'on soumet d'une manière connue à une réaction d'estérification à l'état fondu ou en azéotrope un mélange constitué
   de 0,6 à 0,8 mole d'acide maléique et/ou d'acide fumarique,
   de 0,2 à 0,4 mole d'acide norbornènedicarboxylique,
   de 0,6 à 0,8 mole d'éthylène- et/ou de propylène-glycol,
   de 0,2 à 0,4 mole de diéthylène-glycol,
   de 0,1 à 0,2 mole d'alcool benzylique et/ou d'acide benzoïque et
   de 0 à 0,2 mole d'autres alcools monovalents ou divalents.

3. Mélanges durcissables sous l'influence de rayons ultraviolets, contenant
   a) 40 à 80 parties en poids d'au moins une résine de polyester à insaturation éthylénique,
   b) 20 à 60 parties en poids de styrène,
   c) 0,1 à 5 parties en poids d'au moins un photoinitiateur et
   d) le cas échéant, des substances auxiliaires et des additifs connus,
   caractérisés en ce que le composant a) est constitué d'une résine de polyester ayant un indice d'acide de 0 à 50 et un indice d'hydroxyle de 10 à 150, qui est constituée
   de 0,6 à 0,8 mode de restes d'acide maléique et/ou d'acide fumarique,

de 0,2 à 0,4 mode de restes d'acide norbornènedicarboxylique,

de 0,6 à 0,8 mode de restes d'éthylène- et/ou de propylène-glycol,

de 0,2 à 0,4 mode de restes de diéthylène-glycol,

de 0,1 à 0,2 mole de restes d'alcool benzylique et/ou d'acide benzoïque et

de 0 à 0,2 mode d'autres restes d'alcools.

4. Utilisation des mélanges suivant la revendication 3, pour la production de revêtements durcissables sous l'influence des rayons ultraviolets.

**Revendications pour l'Etat contractant suivant : ES**

1. Procédé de production de résines de polyesters insaturées ayant un indice d'acide de 0 à 50 et un indice d'hydroxyle de 10 à 150, caractérisé en ce qu'on soumet d'une manière connue à une réaction à l'état fondu ou en azéotrope un mélange

de 0,6 à 0,8 mole d'acide maléique et/ou d'acide fumarique,

de 0,2 à 0,4 mole d'acide norbornènedicarboxylique,

de 0,6 à 0,8 mole d'éthylène- et/ou de propylène-glycol,

de 0,2 à 0,4 mole de diéthylène-glycol,

de 0,1 à 0,2 mole d'alcool benzylique et/ou d'acide benzoïque et

de 0 à 0,2 mole d'autres alcools monovalents ou divalents.

2. Mélanges durcissables sous l'influence de rayons ultraviolets, contenant
   a) 40 à 80 parties en poids d'au moins une résine de polyester à insaturation éthylénique,
   b) 20 à 60 parties en poids de styrène,
   c) 0,1 à 5 parties en poids d'au moins un photoinitiateur et
   d) le cas échéant, des substances auxiliaires et des additifs connus,
   caractérisés en ce que le composant a) est constitué d'une résine de polyester ayant un indice d'acide de 0 à 50 et un indice d'hydroxyle de 10 à 150, qui est constituée

de 0,6 à 0,8 mole de restes d'acide maléique et/ou d'acide fumarique,

de 0,2 à 0,4 mole de restes d'acide norbornènedicarboxylique,

de 0,6 à 0,8 mole de restes d'éthylène- et/ou de propylène-glycol,

de 0,2 à 0,4 mole de restes de diéthylène-glycol,

de 0,1 à 0,2 mole de restes d'alcool benzylique et/ou d'acide benzoïque et

de 0 à 0,2 mole d'autres restes d'alcools.

3. Utilisation des mélanges suivant la revendication 2 pour la préparation de revêtements durcissables sous l'influence des rayons ultraviolets.